# EUROPEAN PATENT APPLICATION

(11) **EP 4 790 495 A1**
(43) Date of publication of application: **12.08.2026**
(21) Application number: 25156594.1
(22) Date of filing: 07.02.2025
(51) Int. Cl.: G05B 15/02, G05B 13/02

(54) **AIDING THE CONFIGURATION OF A BUILDING AUTOMATION SYSTEM USING MACHINE LEARNING**

(71) Applicant: ABB SCHWEIZ AG, 5400 Baden (CH)
(72) Inventor: GROß, Christian, 64404 Bickenbach (DE); BORRISON, Reuben, 68782 Brühl (DE); DIX, Marcel, 78476 Allensbach (DE); ROSU, Gabriel, Dublin, D03 AT04 (IE)
(74) Representative: Maiwald GmbH

(57) **Abstract**

A method (100) for generating a configuration (11) for a given building automation system (1) with a given plurality of assets (2-5), and/or for at least one asset (2-5) of said plurality of assets (2-5), the method (100) comprising the steps of:
• providing (110) a set of requirements (7) that characterize a habitable state of the interior of the building (6);
• providing (120) context information (8) about one or more available assets (2-5) of the building automation system (1), the context information (8) comprising at least one or more inputs accepted by the respective assets (2-5) on the one hand, and one or more outputs and/or capabilities delivered by the respective asset (2-5) on the other hand;
• deriving (130), from the set of requirements (7), a set of one or more queries (9), said one or more queries (9) relating to achieving the respective requirement (7) using one or more of the given assets (2-5);
• providing (140) the one or more queries (9) and the context information (8) to a generative machine learning model, GMLM (10); and
• deriving (150), from one or more outputs (10*) of the GMLM (10) obtained in response to the one or more queries (9),
∘ one or more configuration settings (11a) for at least one of the given assets (2-5); and/or
∘ one or more instructions (11b) to provide one or more outputs of one or more first assets (2-5) as inputs to one or more second assets (2-5); and/or
o an amendment (11c) to already existing logic for operating the given asset (2-5); and/or
∘ logic and/or software (11d) for operating the given asset (2-5)

as the sought configuration information (11).

## Description

### FIELD OF THE INVENTION

The invention relates to the field of building automation systems, in particular for controlling heating, ventilation and air conditioning, HVAC, systems.

### BACKGROUND

Building automation systems control a plurality of assets that make a building habitable or otherwise usable for humans to live and/or work inside. In particular, such assets may comprise heating, ventilation and air conditioning, HVAC, systems.

Having all assets under centralized computer control provides the benefit that the operation of the assets may be orchestrated according to a given set of needs, such as meeting certain climatic requirements inside the building while at the same time using not too much energy. But with this comes the obligation to configure and program the system. This is typically the job of a system integrator.

One technique to configure and program such a system is block programming where the main functional components of the system are visually represented by so called blocks which can have in- and outputs. The first task of a system integrator when programming the system is to identify the right block types that represent the system setup at hand from a blocks repository. Subsequently, the in- and outputs of the selected blocks (which could be sensors, logic, actuators etc.) need to be connected and adapted so that the desired functionality is realized. This approach of visual block programming can become quite complex with many electrical devices and wiring. Hence, the programming can become time consuming and difficult to debug.

### OBJECTIVE OF THE INVENTION

It is therefore an objective of the invention to facilitate the programming and configuring of building automation systems while at the same time improving the performance of such systems with respect to a given set of needs.

This objective is achieved by a method according to the independent claim. Further advantageous embodiments are detailed in the dependent claims.

### DISCLOSURE OF THE INVENTION

The invention provides a method for generating a configuration for a given building automation system, and/or for a given asset thereof. The given building automation system comprises a given plurality of such assets. In particular, the building automation system, and/or its assets, may serve to make the interior of the building habitable for the living and/or working of humans.

In the course of the method, a set of requirements that characterize a habitable state of the interior of the building is provided. These requirements may, for example, relate to a temperature or humidity in the interior of the building, a content of oxygen in the interior air, or an absence of one or more noxious substances, such as carbon dioxide or pollutants, in the interior air.

Furthermore, context information about one or more available assets of the building automation system. This context information comprises at least one or more inputs accepted by the respective assets on the one hand, and one or more outputs and/or capabilities delivered by the respective asset on the other hand. For example, the inputs may comprise set-points or other control inputs, such as commands to toggle certain functionality on or off. The outputs may, for example, comprise quantities relating to the operating state of the assets, such as current set-points or switching status of certain functionality, as well as measurement data from sensors, such as temperature sensors, pressure sensors, humidity sensors, voltage sensors, or current sensors. The context information may, for example, further comprise instruction manuals or any other information about how to operate the assets.

Herein, the term "input" is not limited to a physical input that has to be delivered via a (e.g., plugged) connection to a physical socket or other interface of the respective asset. Rather, the term "input" merely represents that certain information is logically destined for the use by the respective asset. The information may be delivered in any suitable manner. For example, the asset may subscribe to a topic relating to the information within a MQTT or other publish-subscribe system. In another example, the BACnet communication protocol may be used for communication between assets, and/or between assets and the building information system.

From the set of requirements, a set of one or more queries is derived. These queries relate to achieving the respective requirement using one or more of the given assets. For example, a query may relate to achieving a set of constant climatic conditions, such as temperature and/or humidity, as well as sufficient ventilation for an envisaged number of people, during certain working hours.

The one or more queries and the context information are provided to a generative machine learning model, GMLM. This causes the GMLM to provide one or more outputs, usually in textual form. In particular, the GMLM may be a large language model, LLM, that is configured to iteratively predict next words of text sequences. In particular, a LLM may be trained on huge datasets of publicly available textual information, with or without a fine-tuning in the industrial domain. In another example, the GMLM may be a multimodal LLM that takes images and text as input. These examples are not to be considered limiting. From the one or more outputs,
- one or more configuration settings for at least one of the given assets; and/or
- one or more instructions to provide one or more outputs of one or more first assets as inputs to one or more second assets; and/or
- an amendment to already existing logic for operating the given asset; and/or
- logic and/or software for operating the given asset; and/or
- one or more images of multiple assets put together
are determined as the sought configuration information.

In this manner, at least a part of the required configuration for the building automation system may be obtained in an automated manner, thereby eliminating a large amount of the manual work to be done by the system integrator and allowing full operation of the building automation system more quickly. Moreover, this automated generation of configuration is not a mere "lift-and-shift" automation of exactly what would otherwise have been done manually. Rather, because the GMLM can consider a far larger amount of context information and also benefits from a training based on even more information, in an amount larger than a human system integrator can ever consider, the results are very likely to be better than the results previously achieved by the system integrator.

For example, the outcome of the method may be a JavaScript Object Notation, JSON, configuration file that may, inter alia, be fed to a visual programming integrated development environment, IDE, such as a Niagara workbench or any HVAC programming tool.

In particular, using the trained GMLM, the following exemplary scenarios are made possible:
- Using a chat window, the system integrator can textually describe what the system he needs to have configured, and a system implementing the proposed method can provide suggestions based on pre-wired and preprogrammed blocks. One may need to provide additional information to it such as HVAC virtual model, metadata about the controllers etc.
- A system implementing the proposed method can suggest improvements or autocompletions based on the blocks and the wiring the system integrator has already selected and added to his program.

In a particularly advantageous embodiment, a set of abstract capabilities of the building automation system is provided. The set of queries is then based also on this set of abstract capabilities. In this manner, the possible solutions are not limited to the use of particular assets from the start. For example, there may be more than one asset that may be used to provide a particular capability. For example, the capability of heating may be provided by the use of a floor heating, an air conditioner with a heating function, an infrared direct heating, or any combination thereof.

In a further particularly advantageous embodiment, the context information further comprises thermal characteristics, and/or an operating state, of the building as a whole or at least one part thereof. This information determines the effect that a given use of an asset has on the conditions in the interior of the building. For example, the better the insulation of the building, the lesser heating or cooling power will be needed to accomplish a given change in temperature. The operating state of the building may, for example, comprise the status of windows. If a window is open, it will allow a higher thermal flow, but it will also allow the entry of desired oxygen, and the exit of unwanted carbon dioxide.

In a further particularly advantageous embodiment, the configuration information is further optimized towards a given optimization goal. There are usually many ways of achieving a given set of conditions regarding a habitable state of the interior of the building. Optimizing allows to find the way that is best with respect to a further given criterion. For example, the given optimization goal may include reducing energy usage and/or cost, and/or reducing wear and tear of at least one asset.

Reducing energy usage may, for example, be accomplished by using, as much as possible, the asset with the highest energy efficiency to achieve a given task. For example, for the task of heating, a floor heating that is driven by a heat pump has the highest energy efficiency. But it also has a high inertia, meaning that a change in the actuation of the heat pump will take its time to propagate to a change in temperature in the interior of the building. To achieve quicker changes in temperature, the use of quicker-acting heat sources is needed. The energy efficiency as a whole can be improved by, for example, changing the actuation of the heat pump in good time before a change in heat output is needed.

Reducing energy cost may, for example, be accomplished by moving the energy consumption to times where energy is cheaper. For example, increasing heating or cooling at times of lower electricity prices may store heat or cold in the thermal mass of the building, or even in a dedicated storage (such as an ice storage) set up for this purpose, for further use at times where electricity prices are higher. This may save money even if it means increasing the total use of energy: if basically only the cheapest kilowatt-hours are used, and the most expensive ones are avoided, it doesn't matter if some more of these cheapest kilowatt-hours are needed.

Reducing the wear and tear of at least one asset may, for example, comprise reducing the frequency with which the asset is turned on and off, or ramped up and down in power. For example, the starting up of an air conditioner involves the buildup of pressure in the system, and this pressure equalizes again after the air conditioner has been turned off. Also, eigenfrequencies of systems with rotating members may be avoided because wear and tear is particularly high at these eigenfrequencies.

The optimizing may be performed in any suitable manner. For example, multiple candidate configurations may be obtained using the GMLM, and the one with the best performance regarding the given optimization goal may be used. In another example, a configuration obtained using the GMLM may be used as a starting point for a separate optimization procedure. For example, the optimization process may vary one or more parameters in the configuration to find values that are better with respect to the given optimization goal.

In particular, the optimizing may include performing the present method for generating configuration information in an iterative manner. That is, the configuration information obtained when performing the method for a first time may be used as a starting point for performing the method for another time. For example, during each iteration, an increasing amount of weight may be attributed to how well the next obtained configuration information contributes to the operation of the building information system meeting the given optimization goal.

In a further particularly advantageous embodiment, the configuration information that was derived from the output of the GMLM, and optionally optimized, is implemented in the building automation system. In this manner, the configured asset, and/or the building automation system as a whole, is put into working order, much more quickly than if the whole configuration would have had to be obtained manually. Also, if the configuration information was optimized towards a given optimization goal, the advantages achieved by this optimization are put into practice by implementing the configuration information in the building automation system.

In a further particularly advantageous embodiment, before implementing the configuration information, the correctness of this configuration information, and/or the feasibility of implementing this configuration information, is verified based at least in part on a given ruleset. This ensures that the building automation system will be able to actually start working based on this configuration information. For example, if a block program for an asset is syntactically incorrect or otherwise deficient, the asset might refuse to start. One possible reason why it might be infeasible to implement configuration information is that it may contain instructions that are mutually exclusive. For example, if a multi-split air conditioning system comprises multiple interior units that are connected to one and the same exterior unit, it is not possible to operate one interior unit in heating mode and another interior unit in cooling mode at the same time.

In a further particularly advantageous embodiment, the logic and/or software comprises a block program where assets of the building automation system are represented as blocks, and the programming comprises connecting these blocks, and setting parameters of these blocks, to realize the desired functionality. This is the form in which the configuration information was previously created manually by the system integrator. If logic and/or software obtained using the GMLM has the same form, it is easy for a system integrator to understand it, and to augment and/or amend it if needed. For the advantageous effect of the present method to appear, it is not required that the solution obtained using the GMLM is fully complete and correct, ready-to-use. Rather, the effect will be already present to a considerable extent if most of the configuration is obtained automatically, and there is only little left for the system integrator to manually do. This is in some way analogous to the beneficial effect of text translations produced using machine learning models: It is usually necessary to proof-read this translation and correct a few things, but the amount of work that is required for this is still far less than the manual preparation of the whole translation that was previously required.

In particular, block programming may start from an abstracted view of the building automation system where building controllers for controlling multiple of the assets (or even all assets) of the system, as well as built-in controllers of the individual assets, have inputs and outputs, and the respective programmed logic dictates how the inputs are processed into outputs. In particular, one or more outputs may be a measure for, and/or correspond to, a physical effect that the respective asset causes in the building automation system.

In a further particularly advantageous embodiment, the logic and/or software comprises an amendment and/or a completion of a given block program or part thereof. Many assets are shipped with a default block program to get started quickly. In some cases, this may already come close to what is needed in the concrete building automation system at hand: sometimes it may suffice to merely adapt a constant or other parameter in the program code. In other cases, most of the functionality that is already present in the existing block program may be re-used, but some functionality needs to be added. For example, some new control strategy that had not been foreseen at the time of writing the original block program may need to be integrated into the block program.

In a further particularly advantageous embodiment, at least one query relates to the establishing of a control loop to keep at least one parameter that characterizes the operating state of at least one asset, and/or of the building automation system as a whole, at a desired set-point. In particular, this control loop may be a closed control loop. But the control loop may, for example, also be an open control loop, and/or operate in a predictive control manner. Building automation systems usually have many of these control loops, e.g., to keep a temperature or a humidity in one or more rooms at a desired set-point. The control loop may operate according to the PID control strategy, or any other control strategy that is appropriate for the concrete system at hand. From the knowledge in the context information, in conjunction with the knowledge learned during training, the GMLM may derive how to assemble the functionality of a control loop from the basic building blocks that each of the assets offers. For example, the output of a sensor may need to be compared to a set-point value; from the determined difference, a control action may need to be computed; and this control action may need to be applied to another asset as input to modify the behaviour of this asset.

In a further particularly advantageous embodiment, a real or virtual building automation system, and/or at least one asset thereof, is operated according to the determined configuration information that was derived from the output of the GMLM and optionally optimized. If the building automation system is a real system in a real building, the interior of the building will then be brought into a state where the interior of the building meets the given requirements as to the habitable state. If the building automation system is a virtual system, e.g., a "digital twin" of a real system, it will become apparent how good the configuration information is for achieving the given requirements. In particular, the simulation may be performed faster than in real-time. This means that multiple candidate configurations may be tested, and a candidate configuration that best meets the requirements may be determined. The real system may then be operated according to the best configuration.

In particular, it may be rated, by means of a given loss function, how well operation of the asset, and/or real or virtual building automation system, according to the configuration information meets the requirements. Parameters that characterize the behaviour of the GMLM, and/or the one or more queries provided to the GMLM, may then be optimized with the goal of improving the value of the loss function. In this manner, future configurations determined using the GMLM are more likely to be good in that operation of the building automation system according to these configurations will cause the requirements to be met.

Typically, any further training of parameters that characterize the behavior of the GMLM in the course of the present method will only be a "fine-tuning", rather than a complete training. A complete training of a GMLM is usually performed on a vast pile of training examples from all walks of life, whereas the present method specializes on knowledge regarding building automation systems. In particular, in the context of the present method, the GMLM may be trained on existing examples of block programmed building automation systems, such as HVAC installations. This allows the GMLM to learn and identify the different block types, as well as ways of adapting them to achieve a certain functionality.

How well operation of the asset, and/or real or virtual building automation system, meets the requirements may be measured according to any suitable metric. In the following, some examples are given. They may be used alone or in combination, and also in combination with other criteria.

In one example, one criterion is whether the asset accepts the configuration information in the first place. If the configuration information is syntactically incorrect or has other defects that prevent it from being processed by the asset, it cannot contribute to the fulfilling of the given requirements by the asset. The error may be fed back to the GMLM, e.g., in the form of an error message, to improve the GMLM.

In another example, one criterion is a speed at which the asset or the building automation system can regulate a parameter that characterizes its operating state to a given set-point, or another quantitative performance indicator. In particular, the speed at which a set-point can be achieved is a well-motivated quality indicator for a control loop.

Also, the amount and/or the nature of feedback from an operator may form a criterion as to how well the requirements are met. If very much feedback is needed, then the automatic operation of the building automation system according to the configuration information may not be enough for fully achieving the given requirements. The same applies for overriding actions or modifications performed by an operator: If these are necessary very frequently, then the configuration of the building automation system as per the configuration information might not cover all situations occurring during the normal operation of the system. Feedback from an operator may, for example, comprise acceptance, rejection or a quantitative rating of configuration information generated using the GMLM. In particular, the generating of the configuration information may be made interactive with the feedback: For example, after one block corresponding to an asset has been shown, the next block may be shown based on the feedback. That is, the next suggestion may be adapted based on the feedback.

In a further particularly advantageous embodiment, the context information further comprises an image or other representation of the arrangement of the complete building automation system. In this manner, the GMLM can be made aware of the arrangement of the building automation system as a whole. In particular, this makes it easier for the GMLM to assemble different building blocks together in order to achieve a particular goal, such as creating a closed control loop.

Alternatively or in combination to this, in another particularly advantageous embodiment, the context information further comprises a library of existing items of logic and/or software for operating at least one asset. This makes it easier for the GMLM to produce logic and/or software that is formally valid. In particular, the GMLM may combine elements from multiple items of logic and/or software together. Many such items have effects that are valid beyond the context of the particular code snippet in which they appear. For example, basic constructs, such as how to declare a variable, how to set up an "if/then/else" control structure or how to set up a loop, are valid for all applications. Other code snippets may be tied to particular controllers.

In particular, the inclusion of existing code in the context information may make up for a potential lack of such code samples in the set of training examples on which the GMLM was trained. GMLMs are mostly trained on large amounts of publicly available textual information. Not all existing block program logic or code might be publicly available because it might be proprietary information of the respective asset manufacturers.

Because it may be fully or at least partially computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

### DESCRIPTION OF THE FIGURES

In the following, the invention is illustrated using Figures without any intention to limit the scope of the invention. The Figures show:
Figure 1: Exemplary embodiment of the method 100 for generating a configuration 11 for a given building automation system 1;
Figure 2: Exemplary layout of a building automation system that may be configured using the method 100;
Figure 3: Exemplary way of training and then using a GMLM 10 in the context of the method 100.

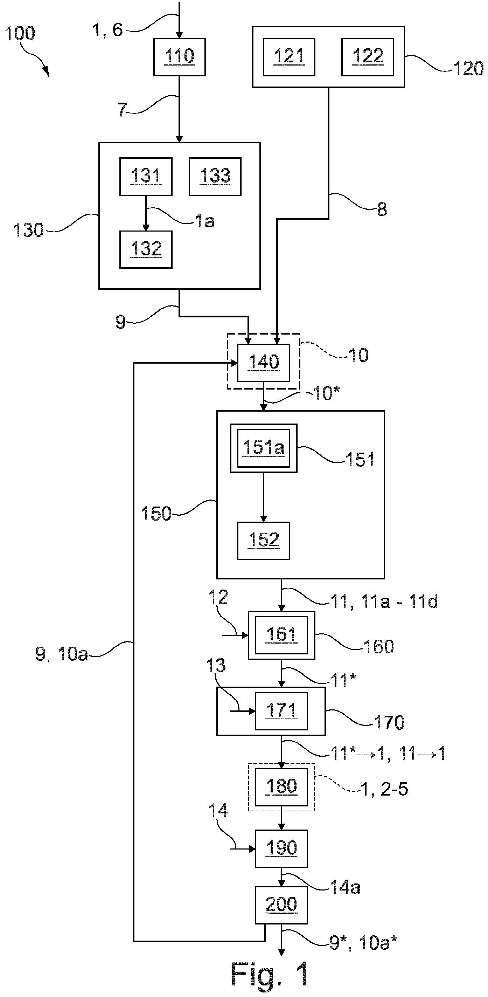

Figure 1 is a schematic flow chart of an embodiment of the method 100 for generating a configuration 11 for a given building automation system 1. The given building automation system belongs to a given building 6. It comprises a given plurality of assets 2-5 to make the interior of a building 6 habitable for the living and/or working of humans. The present method can be used to generate a configuration 11 for the given building automation system 1 as a whole, but also to generate a configuration 11 for individual assets 2-5 of the building automation system 1.

In step 110, a set of requirements 7 that characterize a habitable state of the interior of the building 6 is provided.

In step 120, context information 8 about one or more available assets 2-5 of the building automation system 1 is provided. This context information 8 comprises at least one or more inputs accepted by the respective assets 2-5 on the one hand, and one or more outputs and/or capabilities delivered by the respective asset 2-5 on the other hand.

According to block 121, the context information 8 may further comprise thermal characteristics, and/or an operating state, of the building 6 as a whole or at least one part thereof.

According to block 122, the context information 8 may further comprise:
- an image or other representation of the arrangement of the complete building automation system 1, and/or
- a library of existing items of logic and/or software for operating at least one asset 2-5.

In step 130, a set of one or more queries 9 is derived from the set of requirements 7. These one or more queries 9 relate to achieving the respective requirement 7 using one or more of the given assets 2-5.

According to block 131, a set of abstract capabilities 1a of the building automation system 1 may be provided. According to block 132, the set of one or more queries 9 may then be derived based also on this set of abstract capabilities 1a.

According to block 133, at least one query 9 may relate to the establishing of a control loop to keep at least one parameter that characterizes the operating state of at least one asset 2-5. As discussed before, this may, for example, be a closed control loop, an open control loop, or a control loop that operates in a predictive control manner.

In step 140, the one or more queries 9 and the context information 8 are provided to a generative machine learning model, GMLM 10. This causes the GMLM to produce outputs 10*.

In step 150, the sought configuration information 11 is derived from one or more outputs 10* of the GMLM 10 obtained in response to the one or more queries 9. This configuration information 11 comprises
- one or more configuration settings 11a for at least one of the given assets 2-5; and/or
- one or more instructions 11b to provide one or more outputs of one or more first assets 2-5 as inputs to one or more second assets 2-5; and/or
- an amendment 11c to already existing logic for operating the given asset 2-5; and/or
- logic and/or software 11d for operating the given asset 2-5.

According to block 151, the logic and/or software 11d may comprise a block program where assets 2-5 of the building automation system 1 are represented as blocks. According to block 152, the programming may then comprise connecting these blocks, and setting parameters of these blocks, to realize the desired functionality.

In particular, according to block 151a, the logic and/or software 11d may comprise an amendment and/or a completion of a given block program or part thereof.

In the example shown in Figure 1, in step 160, the configuration information 11 is further optimized towards a given optimization goal 12. This yields an optimized version 11* of the configuration information 11.

According to block 161, the given optimization goal 12 may includes 161 reducing energy usage and/or cost, and/or reducing wear and tear of at least one asset 2-5.

In the example shown in Figure 1, in step 170, the configuration information 11 (or its optimized version 11*) is implemented in the building automation system 1.

In particular, according to block 171, before implementing the configuration information 11, the correctness of this configuration information 11, and/or the feasibility of implementing this configuration information 11, may be verified based at least in part on a given ruleset 13.

In the example shown in Figure 1, in step 180, a real or virtual building automation system 1, and/or at least one asset 2-5 thereof, is operated according to the configuration information 11 (or 11*). That is, the building automation system 1 not only has the configuration information 11 (or 11*) implemented on it, but it is actually operating and using this configuration information 11 (or 11*).

In the example shown in Figure 1, in step 190, a given loss function 14 rates how well operation of the asset 2-5, and/or real or virtual building automation system 1, according to the configuration information 11 (or 11*) meets the initially provided requirements 7. The result is a value 14a.

In the example shown in Figure 1, in step 200, parameters 10a that characterize the behaviour of the GMLM 10, and/or the one or more queries 9 provided to the GMLM 10, are optimized with the goal of improving the value 14a of the loss function 14.

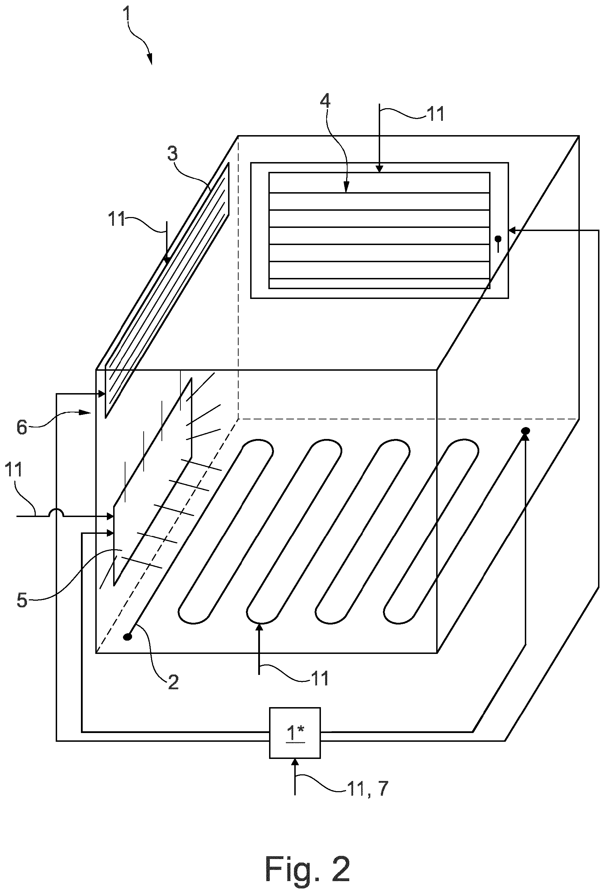

Figure 2 illustrates a simple example of a building automation system 1 on which the method 100 for configuring may be applied. The building automation system 1 comprises a floor heating 2, an air conditioner 3, a drive 4 for a roller shutter, and an infrared direct heater 5. All these assets 2-5 are installed in a building 6, here: a one-room apartment. They are connected to a central controller 1*. Configuration information 11 obtained using the method 100 may be uploaded to each individual asset 2-5, and/or also to the central controller 1*. In particular, each asset 2-5 may be configured to perform its particular job, whereas the central controller 1* may be configured to put the different functionalities of the assets 2-5 together in order to meet the overall requirements 7.

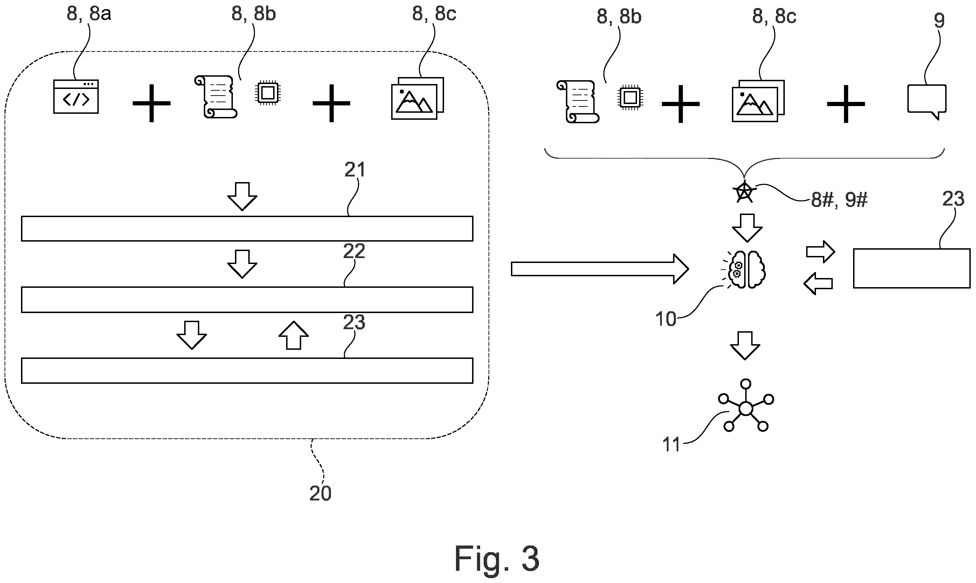

Figure 3 illustrates an exemplary setting 20 in which a GMLM 10 may be trained and then used in the context of the method 100.

In the example shown in Figure 3, the context information 8 further comprises:
- a block code repository 8a with documentation;
- metadata 8b about the building automation system 1, such as the type and/or topology of the building automation system (e.g., HVAC system); and/or
- a virtual model 8c of the building automation system 1, e.g., in the form of images.

This context information 8 is fed into a preprocessing pipeline 21. This preprocessing pipeline is configured to process different user prompts/ comments from the existing samples to finetune/train a multimodal language model. This involves aligning the data with respect to a simulation model corresponding to the building automation system 1, query 9 of the user and the respective code. Once these samples are ready the data is mapped to the embedding space and the multimodal embeddings can be mapped to each other using contrastive learning or similar techniques for creation of joint embeddings. That is, given a corpus of the data and user queries 9, the preprocessing pipeline 21 generates many different samples for block programming code with different metadata and virtual models of the building automation system 1 as context. In particular, the preprocessing pipeline 21 may align the data and create relevant joint embeddings for finetuning/training the GMLM 10.

A finetuning/training pipeline 22 aims at finetuning/training an existing/new multimodal GMLM 10 to take the input query 9 and the relevant context 8 to finetune the model 10. This could be an existing pre-trained model, trained on code generation or question answering dataset. It is also possible to pre-train the model 10 with relevant code samples. That is, the finetuning/training pipeline 22 may work with simulation environment 23 to finetune/train the GMLM 10. This validation can be also based on the simulation runs every n epochs.

A simulation environment 23 helps testing the finetuned/trained model 10 to check if the code generated is working or not. The simulation environment 23 can also be used while training. For example, after every n number of epochs, the simulation environment 23 may be used to test the code and check on the accuracy of the model, by taking feedback from the simulator. This can be done, e.g., by getting few samples from a held-out validation set and thereby getting the model response. The response can be run on simulator and the output checked. The output can be as simple as checking if the compiler complied the code successfully without any error messages.

After training, the GMLM 10 may receive context information 8 (here: the metadata 8b and the virtual model 8c) together with user queries 9. In particular, for processing by the GMLM 10, the context information 8 may be encoded into respective numeric embeddings 8#, and the user queries 9 may be encoded into respective numeric embeddings 9#.

The generated configuration information 11, e.g., block code, may be tested using the simulation environment 23. Feedback from the user may then be obtained based on the output. This could help for the further finetuning of the GMLM 10.

### List of reference signs:

- 1: building automation system
- 1a: abstract capabilities of building automation system 1
- 2-5: assets of building automation system 1
- 2: floor heating
- 3: air conditioner
- 4: roller shutter drive
- 5: infrared direct heating
- 6: building
- 7: requirements for habitable state inside building 6
- 8: context information
- 8#: embeddings of context information 8
- 8a: block code repository as context information 8
- 8b: metadata 8b as context information 8
- 8c: virtual model 8c of system 1 as context information 8
- 9: query to GMLM 10
- 9#: embedding of query 9
- 10: generative machine learning model, GMLM
- 10a: parameters, characterize behaviour of GMLM 10
- 10*: output of GMLM 10
- 11: configuration information, determined by method 100
- 11a: configuration settings for assets 2-5 as configuration information 11
- 11b: instructions to connect asset outputs to inputs as configuration information 11
- 11c: amendment to already existing logic as configuration information 11
- 11d: logic and/or software for asset 2-5 as configuration information 11
- 12: given optimization goal
- 13: ruleset for checking correctness/feasibility
- 14: loss function
- 14a: value of loss function 14
- 20: training setting for GMLM 10
- 21: preprocesssing pipeline
- 22: finetuning/training pipeline
- 23: simulation environment
- 100: method for generating configuration information 11
- 110: providing set of requirements 7
- 120: providing context information 8
- 121: including thermal characteristics/operating state in context information 8
- 122: including representations, logic/software library in context information 8
- 130: deriving queries 9 from requirements 7
- 131: providing set of abstract capabilities 1a
- 132: using abstract capabilities 1a when deriving queries 9
- 133: establishing of closed control loop as query 9
- 140: providing query 9, context information 8 to GMLM 10
- 150: deriving sought configuration information 11 from outputs 10*
- 151: using block program as logic and/or software 11d
- 151a: using amendment of block program as logic and/or software 11d
- 152: connecting blocks and setting parameters
- 160: optimizing GMLM 10 parameters 10a, queries 9, towards goal 12
- 161: reducing energy usage/cost, wear and tear, as optimization goal 12
- 170: implementing configuration information 11 on system 1
- 171: checking correctness/feasibility of configuration information 11
- 180: operating real/virtual system 1 according to configuration information 11
- 190: rating fulfilment of requirements 7 with loss function 14
- 200: optimizing parameters 10a, queries 9

## Claims

1. A method (100) for generating a configuration (11) for a given building automation system (1) with a given plurality of assets (2-5), and/or for at least one asset (2-5) of said plurality of assets (2-5), the method (100) comprising the steps of:
• providing (110) a set of requirements (7) that characterize a habitable state of the interior of the building (6);
• providing (120) context information (8) about one or more available assets (2-5) of the building automation system (1), the context information (8) comprising at least one or more inputs accepted by the respective assets (2-5) on the one hand, and one or more outputs and/or capabilities delivered by the respective asset (2-5) on the other hand;
• deriving (130), from the set of requirements (7), a set of one or more queries (9), said one or more queries (9) relating to achieving the respective requirement (7) using one or more of the given assets (2-5);
• providing (140) the one or more queries (9) and the context information (8) to a generative machine learning model, GMLM (10); and
• deriving (150), from one or more outputs (10*) of the GMLM (10) obtained in response to the one or more queries (9),
∘ one or more configuration settings (11a) for at least one of the given assets (2-5); and/or
∘ one or more instructions (11b) to provide one or more outputs of one or more first assets (2-5) as inputs to one or more second assets (2-5); and/or
o an amendment (11c) to already existing logic for operating the given asset (2-5); and/or
o logic and/or software (11d) for operating the given asset (2-5); and/or
∘ one or more images of multiple assets (2-5) put together as the sought configuration information (11).

2. The method (100) of claim 1, further comprising:
• providing (131) a set of abstract capabilities (1a) of the building automation system (1); and
• deriving (132) the set of one or more queries (9) based also on this set of abstract capabilities (1a).

3. The method (100) of any one of claims 1 to 2, wherein the context information (8) further comprises (121) thermal characteristics, and/or an operating state, of the building (6) as a whole or at least one part thereof.

4. The method (100) of any one of claims 1 to 3, wherein the configuration information (11) is further optimized (160) towards a given optimization goal (12).

5. The method (100) of claim 4, wherein the given optimization goal (12) includes (161) reducing energy usage and/or cost, and/or reducing wear and tear of at least one asset (2-5).

6. The method (100) of any one of claims 1 to 5, further comprising: implementing (170) the configuration information (11) in the building automation system (1).

7. The method (100) of claim 6, further comprising: before implementing the configuration information (11), verifying (171) the correctness of this configuration information (11), and/or the feasibility of implementing this configuration information (11), based at least in part on a given ruleset (13).

8. The method (100) of any one of claims 1 to 7, wherein the logic and/or software (11d) comprises (151) a block program where assets (2-5) of the building automation system (1) are represented as blocks, and the programming comprises (152) connecting these blocks, and setting parameters of these blocks, to realize the desired functionality.

9. The method (100) of claim 8, wherein the logic and/or software (11d) comprises (151a) an amendment and/or a completion of a given block program or part thereof.

10. The method (100) of any one of claims 1 to 9, wherein at least one query (9) relates (133) to the establishing of a control loop to keep at least one parameter that characterizes the operating state of at least one asset (2-5), and/or of the building automation system (1) as a whole, at a desired set-point.

11. The method (100) of any one of claims 1 to 10, further comprising: operating (180) a real or virtual building automation system (1), and/or at least one asset (2-5) thereof, according to the configuration information (11).

12. The method (100) of claim 11, further comprising:
• rating (190), by means of a given loss function (14), how well operation of the asset (2-5), and/or real or virtual building automation system (1), according to the configuration information (11) meets the requirements (7); and
• optimizing (200) parameters (10a) that characterize the behaviour of the GMLM (10), and/or the one or more queries (9) provided to the GMLM (10), with the goal of improving the value (14a) of the loss function (14).

13. The method (100) of claim 12, wherein how well operation of the asset (2-5), and/or real or virtual building automation system (1), meets the requirements (7) is determined (191) based at least in part on one or more of:
• whether the asset (2-5) accepts the configuration information (11);
• a speed at which the asset (2-5) or the building automation system (1) can regulate a parameter that characterizes its operating state to a given set-point, or another quantitative performance indicator;
• feedback from an operator; and
• overriding actions or modifications performed by an operator.

14. The method (100) of any one of claims 1 to 13, wherein the context information (8) further comprises (122):
• an image or other representation of the arrangement of the complete building automation system (1), and/or
• a library of existing items of logic and/or software for operating at least one asset (2-5).

15. A computer program, comprising machine-readable instructions that, when executed by one or more computers and/or compute instances, causes the one or more computers to perform the method (100) according to any one of claims 1 to 14.

16. A non-transitory machine-readable data carrier, and/or a download product, with the computer program of claim 15.

17. One or more computers and/or compute instances with the computer program of claim 15, and/or with the machine-readable data carrier and/or download product of claim 16.
